Europäisches Patentamt

European Patent Office

Office européen des brevets

(19)

(11) Veröffentlichungsnummer : **0 373 368 B1**

(12)

# EUROPÄISCHE PATENTSCHRIFT

(45) Veröffentlichungstag der Patentschrift :
**10.06.92 Patentblatt 92/24**

(51) Int. Cl.$^5$ : **F16H 61/22, // F16H59:54**

(21) Anmeldenummer : **89120958.7**

(22) Anmeldetag : **11.11.89**

(54) **Vorrichtung zum Verriegeln eines Betätigungshebels einer Schaltvorrichtung eines Gangwechselgetriebes in einer einembestimmten Schaltzustand oder Schaltprogramm zugehörigen Hebelstellung in Abhängigkeit von einem Bremspedal.**

(30) Priorität : **16.12.88 DE 3842333**

(43) Veröffentlichungstag der Anmeldung :
**20.06.90 Patentblatt 90/25**

(45) Bekanntmachung des Hinweises auf die
Patenterteilung :
**10.06.92 Patentblatt 92/24**

(84) Benannte Vertragsstaaten :
**FR GB IT SE**

(56) Entgegenhaltungen :
**FR-A- 2 084 895
US-A- 3 994 183
US-A- 4 096 930**

(73) Patentinhaber : **DAIMLER-BENZ
AKTIENGESELLSCHAFT
Mercedesstrasse 136
W-7000 Stuttgart 60 (DE)**

(72) Erfinder : **Wawra, Helmut
J.F. Weishaar-Strasse 43
W-7054 Korb (DE)**
Erfinder : **Albrecht, Wilhelm
Goethe-Strasse 91
W-7143 Vaihingen/Enz (DE)**
Erfinder : **Wagner, Bernd
Stettener Strasse 1
W-7053 Kernen (DE)**
Erfinder : **Franke, Andreas
Nähterstrasse 111
W-7000 Stuttgart 60 (DE)**
Erfinder : **Gellner, Harald
Triebstrasse 17
W-7142 Marbach 3 (DE)**

**Beschreibung**

Die Erfindung bezieht sich auf eine Vorrichtung nach dem Oberbegriff von Patentanspruch 1.

Bei einer bekannten Vorrichtung dieser Art (US-A-40 96 930) zum Verriegeln eines nach Art einer Lenkradschaltung an der Lenksäule gelagerten Handwählhebels eines selbsttätig schaltenden Gangwechselgetriebes ist die Anordnung so getroffen, daß das Bremspedal mit einer zum Handwählhebel führenden Zugstange gelenkig verbunden ist, welche durch das federnde Zwischenglied in Form einer vorgespannten Druckfeder mit einem Verriegelungsbolzen verbunden ist, welcher in zwei Aufnahmelöcher einer Verriegelungsscheibe einfahren kann, welche mit dem Handwählhebel fest verbunden ist, wobei in der Parkstellung und in der Neutralstellung des Handwählhebels jeweils eines der Aufnahmelöcher mit dem Verriegelungsbolzen fluchtet. Eine Entriegelung des Handwählhebels erfolgt dann durch Niedertreten des Bremspedales, welches durch seine Gelenkverbindung mit der Zugstange eine Zwangskoppelung mit dem Verriegelungsbolzen aufweist.

Durch die Verwendung einer starren Zugstange ist die bekannte Vorrichtung nicht ohne weiteres für die Verriegelung eines nach Art einer Mittelschaltung auf dem Getriebetunnel angeordneten Handwählhebels geeignet, weil zwischen Bremspedal und einem solchen Handwählhebel eine einfache Zugstange naturgemäß nicht untergebracht werden kann. Wenn infolge eines Unfalles oder dergleichen die Zugstange beschädigt wird, besteht bei der bekannten Vorrichtung die Gefahr, daß der Handwählhebel nicht entriegelbar und/oder das Bremspedal nicht mehr betätigbar ist.

Die der Erfindung zugrundeliegende Aufgabe besteht im wesentlichen darin, eine Vorrichtung zum Verriegeln des Betätigungshebels einer Schaltvorrichtung eines Gangwechselgetriebes, insbesondere des nach Art einer Mittelschaltung neben dem Fahrersitz angeordneten Wählhebels bei einer selbsttätigen Schaltvorrichtung, in Abhängigkeit von der Stellung des Bremspedales zu schaffen, bei welcher der Betätigungshebel auch nicht verriegelbare Hebelstellungen einnehmen kann, wobei aus Sicherheitsgründen hydraulische Mittel nicht zum Einsatz kommen sollen und ein Bruch mechanischer Gestängeglieder nicht zu einer Beeinträchtigung der Schaltvorrichtung führen darf.

Ausgehend von einer Schaltvorrichtung der gattungsgemäßen Art ist die erläuterte Aufgabe in vorteilhafter Weise mit den kennzeichnenden Merkmalen von Patentanspruch 1 gelöst.

Die Unteransprüche haben vorteilhafte Ausgestaltungen und Weiterbildungen der Erfindung zum Gegenstand.

Während die Ausgestaltungen hauptsächlich auf die Anwendung der Erfindung für einen praxisgerechten Einbau von Vorrichtungsteilen in Nähe des Bremspedales abgestellt sind, werden durch einige der Weiterbildungen auch Funktionsvorteile erreicht wie eine zusätzliche zündschlossabhängige Verriegelung der Parkstellung und eine zusätzliche bremspedalabhängige Verriegelung der Neutralstellung sowie eine fahrgeschwindigkeitsabhängige Aufhebung oder Verhinderung der Verriegelung der Neutralstellung.

Einzelheiten der Erfindung ergeben sich aus der nachstehenden Beschreibung von in der Zeichnung dargestellten Ausführungsbeispielen. In der Zeichnung bedeuten:

Fig. 1 die schematische Darstellung einer in Abhängigkeit ausschließlich von der Stellung eines Bremspedales arbeitenden Verriegelungsvorrichtung nach der Erfindung zum Verriegeln der Park-Stellung eines Wählhebels einer selbsttätigen Schaltvorrichtung eines Gangwechselgetriebes eines Kraftfahrzeuges in einer ersten Ausführungsform,

Fig. 2 eine detailliertere Darstellung einer Variante der Verriegelungsvorrichtung von Fig. 1 als eine zweite Ausführungsform der Erfindung,

Fig. 2a einen Schnitt durch die Verriegelungsvorrichtung von Fig. 2 nach Linie IIa-IIa,

Fig. 2b einen Schnitt durch die Verriegelungsvorrichtung von Fig. 2 nach Linie IIb-IIb von Fig. 2,

Fig. 3 die schematische Darstellung einer weiteren Variante der Verriegelungsvorrichtung von Fig. 1 anhand eines auf die Abweichung beschränkten Ausschnittes als eine dritte Ausführungsform der Erfindung,

Fig. 4 die schematische Darstellung einer in Abhängigkeit sowohl von der Stellung eines Bremspedales als auch von der Stellung eines Zündschlosses arbeitenden Verriegelungsvorrichtung für die Park-Stellung eines Wählhebels einer selbsttätigen Schaltvorrichtung eines Gangwechselgetriebes eines Kraftfahrzeuges als eine vierte Ausführungsform der Erfindung,

Fign. 4a bis 4d die Darstellung von vier verschiedenen Stellungen der Verriegelungsvorrichtung von Fig. 4,

Fig. 5 die schematische Darstellung einer auf die zusätzliche Verriegelung der Neutralstellung abgestellten weiteren Variante der Verriegelungsvorrichtung von Fig. 1 anhand eines auf die Abweichung beschränkten Ausschnittes als eine fünfte Ausführungsform der Erfindung, und

Fig. 6 die schematische Darstellung einer auf die zusätzlich in Abhängigkeit von der Stellung eines Zündschlosses vorgesehene Verriegelung der Park-Stellung abgestellte Variante der Verriegelungsvorrichtung von Fig. 5 als eine sechste Ausführungsform der Erfindung.

Die einzelnen Ausführungsformen weisen gleiche bzw. einander entsprechende Merkmale oder Funktionen auf, für die jeweils dasselbe Bezugszeichen verwendet ist, um Wiederholungen in der Beschreibung zu vermeiden.

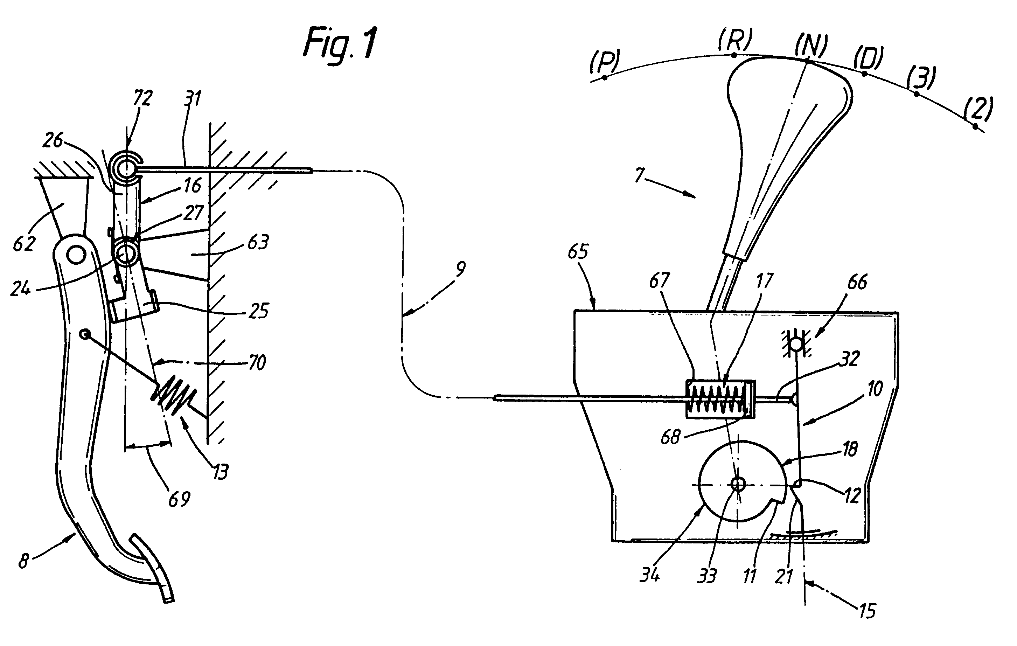

Unter Bezugnahme auf die Ausführungsform von Fig. 1 sind mittels je einer fahrzeugfesten Lagerkonsole 62 bzw. 63 ein Bremspedal 8 sowie ein federndes Zwischenglied 16 eines zu einem Wählhebel 7 führenden biegsamen mechanischen Stellgestänges 9 zur Übertragung von Zug- und Druckkräften schwenkbar gelagert. Das Bremspedal 8 wird durch die übliche Rückholfeder 13 in seiner gezeichneten Ruhestellung gehalten. Das Zwischenglied 16 besteht aus zwei um die gemeinsame Schwenkachse 24-24 schwenkbar gelagerten Hebeln 25 und 26 sowie einer die Hebel an sich in einer gestreckten gegenseitigen Anschlagstellung haltenden Torsionsfeder 27, welche mit niedrigeren Federkräften ausgelegt ist als die Rückholfeder 13.

Der Wählhebel 7 ist in bekannter, nicht mehr dargestellter Weise Bestandteil einer selbsttätigen Schaltvorrichtung des Gangwechselgetriebes und somit in die üblichen Stellungen (P), (R), (N), (D), (3) und (2) betätigbar. Zu diesem Zweck ist der Wählhebel 7 um eine zu einem neben dem Fahrersitz verlaufenden Getriebetunnel 65 ortsfeste Schwenkachse 33 schwenkbar gelagert.

Der Wählhebel 7 ist ferner in Abhängigkeit von der Stellung des Bremspedales 8 auf folgende Weise in seiner Park-Stellung (P) verriegelbar:

Das in Nähe des Wählhebels 7 liegende Gestängeende 32 des Stellgestänges 9 ist an einem Riegelelement 10 angelenkt, welches mittels eines Gelenkes 66 am Getriebetunnel 65 in Nähe des Wählhebels 7 schwenkbar aufgehängt ist.

Der Wählhebel 7 weist ein zentrisch zu seiner Schwenkachse 33-33 angeordnetes Nockenscheibenteil 34 mit einem Sperrnocken 11 und einem Steuernocken 18 auf. In entsprechender Weise sind am Riegelelement 10 ein Gegensperrnocken 12 und ein Gegensteuernocken 21 ausgebildet. Wenn sich der Wählhebel 7 in einer seiner nicht verriegelbaren Stellungen - bspw. wie gezeichnet in der Neutralstellung (N) - befindet, ist das Riegelelement 10 durch den Eingriff von Steuernocken 18 und Gegensteuernocken 21 in eine Freigangstellung 15 betätigt, in welcher Sperrnocken 11 und Gegensperrnocken 12 außer Eingriff sind. In diese Freigangstellung 15 ist das Riegelelement 10 auch durch federnde Mittel 17 betätigbar, welche zwischen einem fahrzeugfesten Widerlager 67 und einem zum Gestängeende 32 festen Federteller 68 eingespannt und mit niedrigeren Federkräften als die Torsionsfeder 27 ausgelegt sind.

Das federnde Zwischenglied 16 ermöglicht es, daß das Bremspedal 8 - sofern es nicht im Sinne einer Fahrzeugbremsung betätigt wird - in seiner Ruhestellung verharrt, wenn das Riegelelement 10 in seine Freigangstellung 15 gebracht ist, weil hierbei der Hebel 26 um einen Differenzdrehwinkel 69 gegenüber dem in Anlage am Bremspedal 8 verbleibenden anderen Hebel 25 unter Zusammenspannen der Torsionsfeder 27 durch das Stellgestänge 9 verschwenkt wird und die Torsionsfeder 27 schwächer als die Rückholfeder 13 ist.

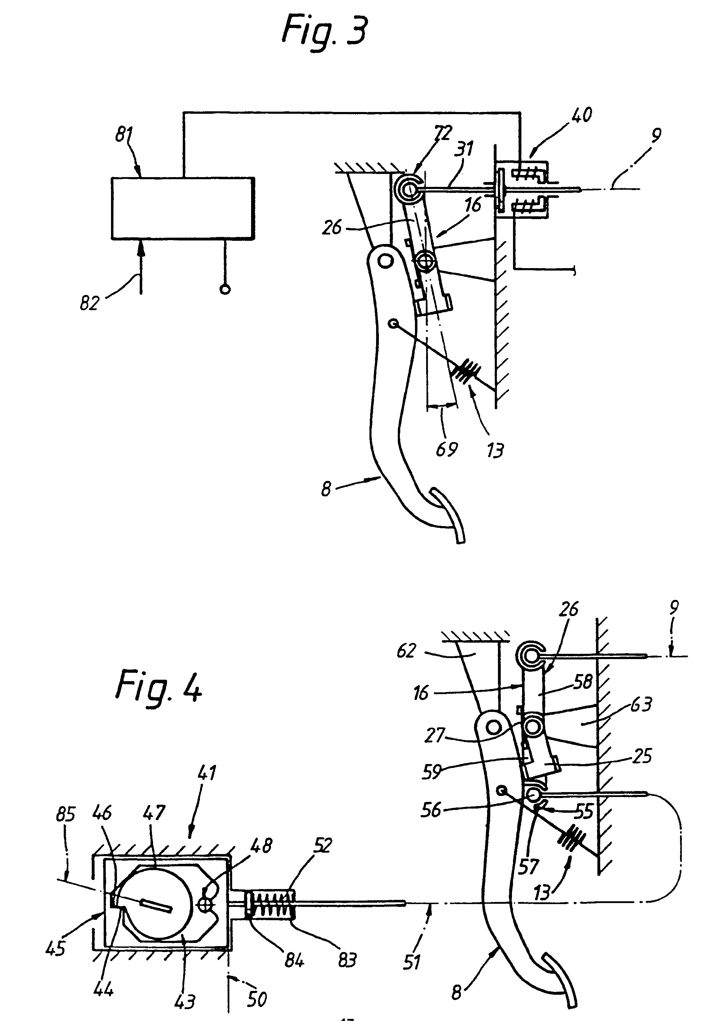

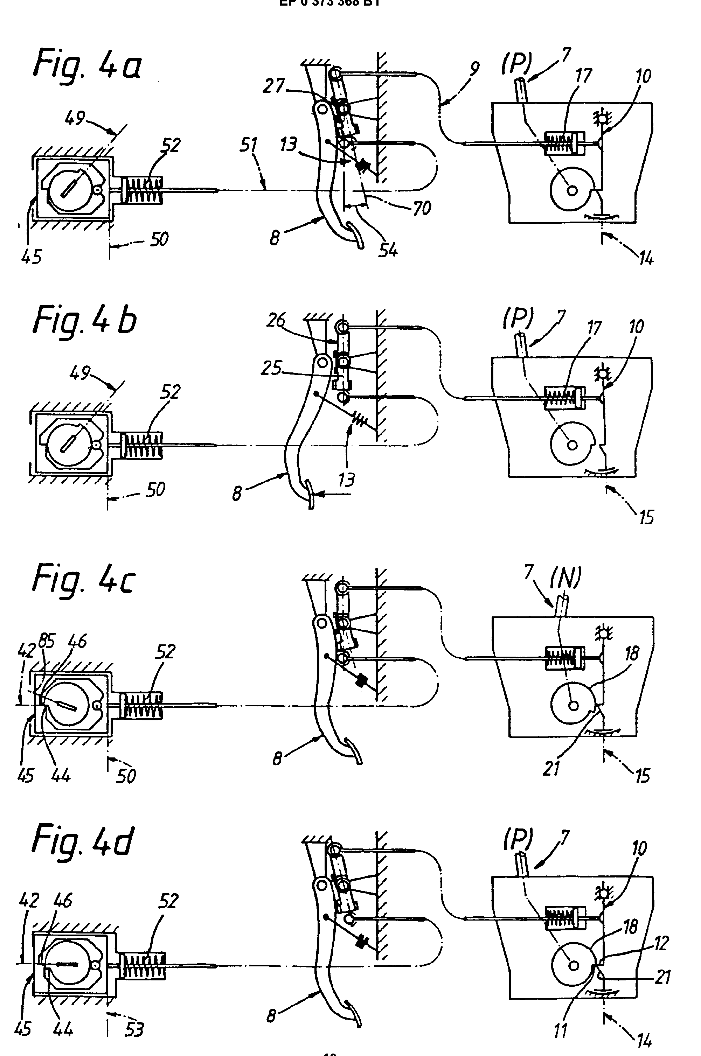

Beim Betätigen des Wählhebels 7 in dessen Park-Stellung (P) gelangen Steuer- und Gegensteuernocken 18 und 21 außer Eingriff, wodurch das Riegelelement 10 durch die gegen die schwächere Feder 17 arbeitende Torsionsfeder 27 in eine Verriegelungsstellung 14 (Fign. 4a und 4d) betätigt wird, in welcher Sperrnocken 11 und Gegensperrnocken 12 in gegenseitigem Eingriff sowie die Hebel 25 und 26 wieder in ihrer gegenseitigen gestreckten Anschlagstellung 70 stehen.

Eine Freigabe des Wählhebels 7 in der Park-Stellung (P) ist nur dadurch möglich, daß das Bremspedal 8 niedergetreten wird, wodurch die federnden Mittel 17 zur Betätigung des Riegelementes 10 in die Freigangstellung 15 freigegeben werden.

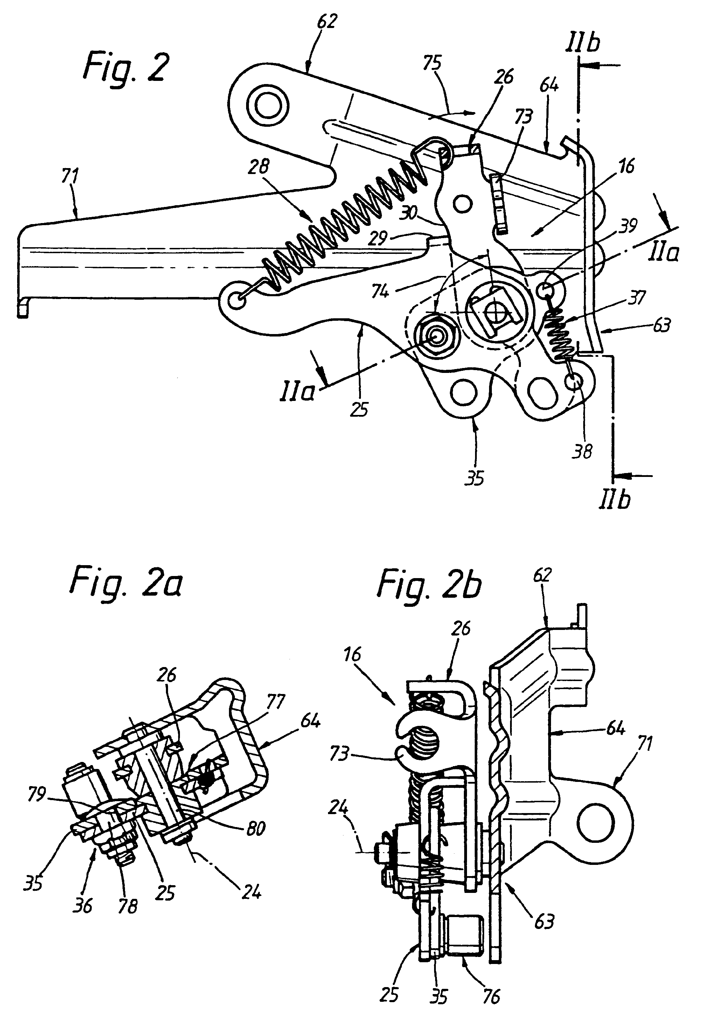

Bei der Ausführungsform der Fign. 2, 2a und 2b sind die Lagerkonsolen 62 und 63 für das Bremspedal 8 und für das federnde Zwischenglied 16 an einem gemeinsamen Blechpreßteil 64 ausgebildet, welches einen zu ihm ebenfalls einteiligen Halter 71 zu seiner fahrzeugseitigen Befestigung aufweist. Bei dieser Ausführungsform sind die Hebel 25 und 26 durch eine Zugfeder 28 in der durch Anschlag- und Gegenanschlagmittel 29 und 30 fixierten gegenseitigen Anschlagstellung 74 gehalten. Wie bei der ersten Ausführungsform ist das dem Bremspedal 8 zugehörige Gestängeende 31 des Stellgestänges 9 mittels eines Kugelgelenkes 72 am Hebel 26 befestigt, von dem in den Figuren 2 und 2b lediglich die Gelenkpfanne 73 gezeichnet ist. Beim Betätigen des Riegelelementes 10 (Fig. 1) in die Freigangstellung 15 wird der Hebel 26 bei der Ausführungsform der Fig. 2 durch das Gestängeende 31 aus der Stellung 74 in Pfeilrichtung 75 gegenüber dem Hebel 25 betätigt, um die für das Verharren des Bremspedales 8 in der Ruhestellung erforderliche Verlängerung der wirksamen Länge des Stellgestänges 9 zu erhalten.

Um den mit dem Bremspedal 8 zusammenarbeitenden Hebel 25 bei der Montage justieren zu können, ist sein diesbezüglicher Nocken 76 in Form einer drehbaren Rolle - welche am Bremspedal 8 zur Anlage gebracht wird - an einem Nockenhebel 35 vorgesehen, welcher um die Schwenkachse 24-24 mittels einer Nabenlagerung 77 am Hebel 25 schwenkbar gelagert ist. Der Nockenhebel 35 ist ferner durch eine lösbare reibschlüssige Schraubverbindung 36 mit dem Hebel 25 verbunden. Der Schraubbolzen 78 dieser Verbindung durchsetzt einen zur Schwenkachse 24-24 konzentrischen Führungsschlitz 79 im Nockenhebel 35. In korrespondierende Ösen 38 und 39 des Hebels 25 und des Nockenhebels 35 ist eine Einstellfeder 37 in Form einer zylindrischen Schraubenzugfeder eingehängt, welche am Nockenhebel 35 ein die Rolle 76 am Bremspedal 8 in Anlage bringendes Hebelmoment erzeugt, wenn der Hebel 25 in einer bestimmten Montagestellung gegenüber einem Fahrzeugteil festgelegt und die Schraubverbindung 36 gelöst ist. Für die Lagerung der Hebel 25 und 26 ist ein im Blechpreßteil 64 gehaltener Lagerbolzen 80 verwendet, auf dem die Hebel mittels je einer zugehörigen Nabe schwenkbar angeordnet sind.

Bei der Ausführungsform der Figur 3 arbeitet ein Elektro-magnet 40 in Abhängigkeit von der Fahrgeschwindigkeit so auf das mit dem Zwischenglied 16 über das Gelenk 72 verbundene Gestängeende 31 des Stellgestänges 9, daß der Hebel 26 bei einer Fahrgeschwindigkeit größer als etwa 1,5 km/h um den Differenzdrehwinkel 69 in die Stellung betätigt wird, in welcher die federnden Mittel 17 zur Betätigung des Riegelelementes 10 in dessen Freigangstellung 15 freigegeben sind. Zu diesem Zweck ist der Elektromagnet 40 an ein elektronisches Steuergerät 81 angeschlossen, welches in entsprechender Weise ein von der Fahrgeschwindigkeit abhängiges Eingangssignal 82 verarbeitet. Dabei wird der Elektromagnet 40 bei Überschreiten des betreffenden Schwellwertes der Fahrgeschwindigkeit unabhängig davon angesteuert, ob das Bremspedal 8 in seiner an sich durch die Rückholfeder 13 aufrecht erhaltenen Ruhestellung steht oder nicht. Diese Ausführungsform findet Anwendung, wenn der Wählhebel 7 in der Neutralstellung (N) verriegelbar ist.

Bei der Ausführungsform der Fig. 4 ist die Park-Stellung (P) zusätzlich in Abhängigkeit von der Stellung eines Zündschlosses verriegelbar, wobei eine diesbezügliche zündschloßabhängige Verriegelungsvorrichtung 41 über ein zugehöriges biegsames mechanisches Gestänge 51 zur Übertragung von Zug- und Druckkräften an das dem Bremspedal 8 zugehörige Stellgestänge 9 an einer zwischen federndem Zwischenglied 16 und Riegelelement 10 liegenden Stelle angekoppelt ist. Dabei ist diese Ankoppelung so getroffen, daß der mit dem Stellgestänge 9 verbundene Hebel 26 des Zwischengliedes 16 als zweiarmiger Umkehrhebel ausgebildet ist, bei welchem der eine Hebelarm 58 mit dem Stellgestänge 9 und der andere Hebelarm 59 über ein einen Leerweg (Differenzdrehwinkel 54 in Fig. 4a) ermöglichendes Schiebegelenk 55 mit dem Stellgestänge 51 verbunden ist. Der Hebel 26 arbeitet wiederum über die Torsionsfeder 27 auf den Hebel 25, welcher am Bremspedal 8 in Anlage bringbar ist, wenn letzteres in seiner durch die Rückholfeder 13 an sich aufrechterhaltenen Ruhestellung steht.

Zur Erzielung des Leerweges 54 ist die Gelenkkugel 56 des Schiebegelenkes 55 gegenüber der Gelenkpfanne 57 in bekannter Weise verschiebbar geführt.

Das Zündschloß weist einen Schließzylinderkern auf, welcher mit einem koaxialen Nockenwellenteil 43 der Verriegelungsvorrichtung 41 gekuppelt und durch den Zündschlüssel zwischen einer Schlüsselabzugsstellung 42 und einer Fahrtstellung 49 betätigbar ist. Die Verriegelungsvorrichtung 41 weist einen vom Nockenwellenteil 43 durchsetzten rahmenförmigen Riegelschieber 45 auf, welcher senkrecht zur Drehachse des Nockenwellenteiles 43 verschiebbar gelagert ist. Das Nockenwellenteil 43 ist mit einem Sperrnocken 44 und einem Steuernocken 47 versehen, während der Riegelschieber 45 in entsprechender Weise mit einem Gegensperrnocken 46 und einem Gegensteuernocken 48 versehen ist. Beim Betätigen des Zündschlosses in die Fahrtstellung 49 wird der Riegelschieber 45 durch den Eingriff von Steuernocken 47 und Gegensteuernocken 48 in eine Verriegelungsstellung 50 verschoben, in welcher der Gegensperrnocken 46 in der Bewegungsbahn des Sperrnockens 44 liegt, wodurch die Schlüsselabzugsstellung 42 für den Schließzylinderkern blockiert ist. Während das eine Gestängeende des Stellgestänges 51 mit dem Schiebegelenk 55 verbunden ist, arbeitet das andere Gestängeende des Stellgestänges 51 mit dem Riegelschieber 45 zusammen, wobei federnde Mittel 52 zur Betätigung des Riegelschiebers 45 in eine Freigangstellung 53 (Fig. 4d) zwischen einem fahrzeugfesten Widerlager 83 und einem zum betreffenden Gestängeende festen Federteller 84 eingespannt sind. In der Freigangstellung 53 liegt der Gegensperrnocken 46 nicht in der Bewegungsbahn des Sperrnockens 44, so daß die Schlüsselabzugsstellung 42 für den Schließzylinderkern freigegeben ist.

Die Abstimmung zwischen den verschiedenen Federn ist wie folgt getroffen:

Die federnden Mittel 52 für die Freigangstellung 53 des Riegelschiebers 45 sind mit größeren Federkräften ausgelegt als die federnden Mittel 17 für die Freigangstellung 15 des Riegelelementes 10.

Die Torsionsfeder 27 des Zwischengliedes 16 ist mit größeren Federkräften ausgelegt als die federnden Mittel 17 für die Freigangstellung 15 des Riegelelementes 10.

Die Rückholfeder 13 ist mit größeren Federkräften ausgelegt als die Torsionsfeder 27 des Zwischengliedes 16.

Die Abstimmung der wirksamen Gestängelängen und des Leerweges auf die beiden jeweils möglichen Stellungen von Riegelelement 10 und Riegelschieber 45 ist folgendermaßen getroffen:

Wenn sich gemäß Fig. 4a der Wählhebel 7 in der Park-Stellung (P), das Bremspedal 8 in der Ruhestellung und das Zündschloß in der Fahrtstellung 49 befinden, stehen sowohl das Riegelelement 10 als auch der Riegelschieber 45 in ihrer jeweiligen Verriegelungsstellung 14 bzw. 50, wobei der Leerweg (Differenzdrehwinkel 54) voll wirksam ist, weil die federnden Mittel 52 durch die Betätigungskräfte am Riegelschieber 45 und die federnden Mittel 17 durch die Rückholfeder 13 (die beiden Hebel 25 und 26 werden durch die Torsionsfeder 27 dabei in ihrer gegenseitigen gestreckten Anschlagstellung 70 gehalten) jeweils zusammengespannt sind.

Wenn sich gemäß Fig. 4b wiederum der Wählhebel 7 in der Park-Stellung (P) und das Zündschloß in der Fahrtstellung 49 befinden, dagegen das Bremspedal 8 unter Überwindung der Federkraft der Rückholfeder 13 niedergetreten ist, wird das Riegelelement 10 durch die federnden Mittel 17da die Gegenwirkung der Rückholfeder 13 weggefallen istin seine Freigangstellung 15 betätigt, während das Zündschloß in seiner Fahrtstellung 49 verharrt, was durch den nun zu Null gewordenen Leerweg (Differenzdrehwinkel 54) ermöglicht ist.

Wenn gemäß Fig. 4c der Wählhebel 7 nunmehr in die Neutralstellung (N) betätigt ist, das Bremspedal 8 in seiner Ruhestellung steht und das Zündschloß unter diesen Umständen aus seiner Fahrtstellung 49 in Richtung der Schlüsselabzugsstellung 42 betätigt werden soll, gelangen hierbei Sperrnocken 44 und Gegensperrnocken 46 in Eingriff, so daß der Schließzylinderkern in einer Sperrstellung 85 vor Erreichen der Schlüsselabzugsstellung 42 blockiert wird, weil die federnden Mittel 52 durch den Eingriff von Steuernocken 18 und Gegensteuernocken 21 von dem Riegelschieber 45 abgeschaltet sind.

Wird in dem Verriegelungszustand der Fig. 4c dagegen der Wählhebel 7 nunmehr gemäß Fig. 4d in die Park-Stellung (P) betätigt, werden Steuernocken 18 und Gegensteuernocken 21 außer Eingriff gebracht, wodurch die federnden Mittel 52 freigegeben werden und den Riegelschieber 45 in seine Freigangstellung 53 betätigen - während der Wählhebel 7 durch den nunmehrigen Eingriff von Sperr- und Gegensperrnocken 11 und 12 verriegelt wird. Das Zündschloß ist somit in die Schlüsselabzugsstellung 42 unter Federwirkung gebracht.

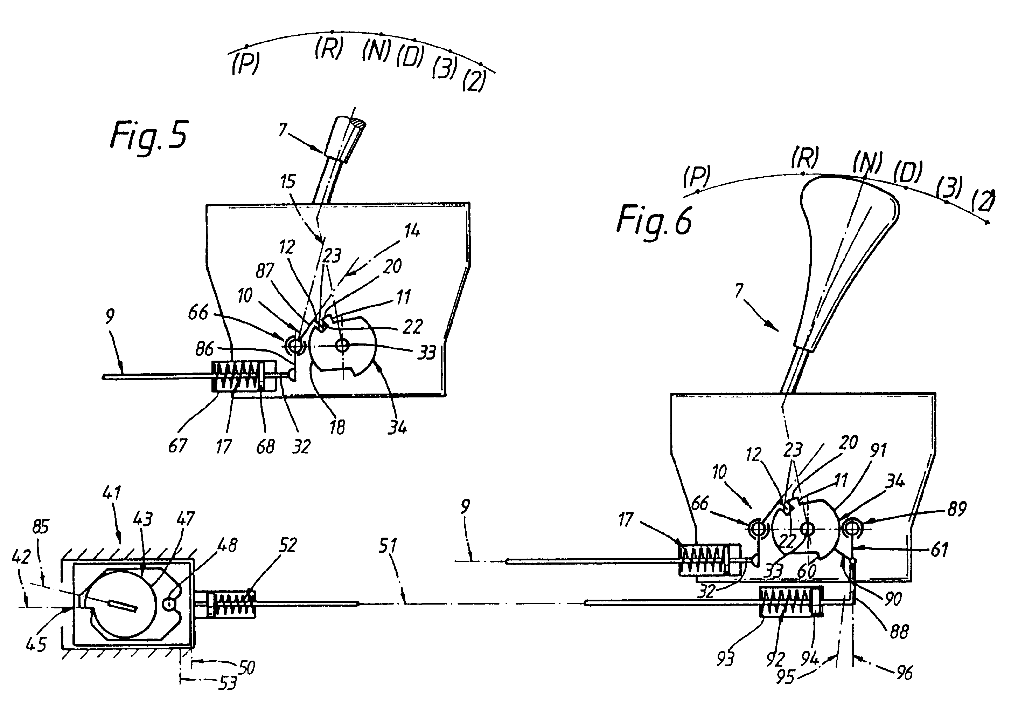

Bei der Ausführungsform der Fig. 5 ist der Wählhebel 7 zusätzlich noch in der Neutralstellung (N) in Abhängigkeit von der Stellung des Bremspedales 8 verriegelbar, d.h., die Betätigung des Wählhebels 7 aus der Neutralstellung (N) heraus ist nur bei niedergetretenem Bremspedal 8 möglich. Zu diesem Zweck weist das Nockenscheibenteil 34 des Wählhebels 7 an seinem Außenumfang - angrenzend an den der Park-Stellung (P) zugehörigen Sperrnocken 11 - einen der nicht verriegelbaren Schaltstellung (R) des Rückwärtsganges zugeordneten Steuernocken 20 sowie eine sich anschließende Raste mit sich in den Umfangsrichtungen gegenüberliegenden Sperrnockenflächen 22 und 23 auf, wobei sich schließlich an die letztgenannte Sperrnockenfläche 23 die Steuernockenfläche 18 für die übrigen nicht verriegelbaren Stellungen (D), (3) und (2) anschließt.

Während der Wählhebel 7 wiederum um die Schwenkachse 33-33 schwenkbar gelagert sowie das Nockenscheibenteil 34 zentrisch zur Schwenkachse 33-33 und bewegungsfest zum Wählhebel 7 angeordnet sind, ist das mit dem Stellgestänge 9 und den federnden Mitteln 17 in der bereits beschriebenen Weise zusammenarbeitende Riegelelement 10 als ein durch das Gelenk 66 an einer mittleren Stelle schwenkbar gelagerter zweiarmiger Umlenkhebel ausgebildet, dessen einer Hebelarm 86 mit dem Gestängeende 32 gelenkig verbunden ist und dessen anderer Hebelarm 87 als klinkenartiger Gegensperrnocken 12 sowie auch als Gegensteuernocken arbeitet.

Das Riegelelement 10 ist wiederum aus der gezeichneten Verriegelungsstellung 14 für die Neutralstellung (N) durch die sich einerseits an einem fahrzeugfesten Widerlager 67 und andererseits an einem zum Gestängeende 32 bewegungsfesten Federteller 68 abstützenden federnden Mittel 17 in eine Freigangstellung 15 betätigbar. Während die Sperrnockenfläche 22 das Betätigen in Richtung der (R)-Stellung verhindert, blockiert die Sperrnockenfläche 23 eine Betätigung des Wählhebels 7 in Richtung der (D)-Stellung.

Der klinkenartige Gegensperrnocken 12 arbeitet in der (R)-Stellung des Wählhebels 7 mit dem Steuernocken 20 und in den Stellungen (D), (3) und (2) mit dem Steuernocken 18 in genau in der gleichen Weise zusammen wie bei der ersten Ausführungsform der Fig. 1 der Gegensteuernocken 21 mit dem Steuernocken 18 in den nicht verriegelbaren Stellungen (R), (N), (D), (3) und (2). Um während der Fahrt normale Umschaltungen über den Wählhebel 7 - bei denen die (N)-Stellung mit einbezogen ist - nicht zu blockieren, ist es vorteilhaft, die Aufhebung bzw. Vermeidung der bremspedalabhängigen Verriegelung oberhalb eines Mindestwertes der Fahrgeschwindigkeit unter Verwendung der Anordnung nach Fig. 3 vorzusehen.

In Weiterbildung der Ausführungsform von Fig. 5 mit bremspedalabhängiger Verriegelung sowohl der Park-Stellung (P) als auch der Neutralstellung (N) ist bei der Ausführungsform der Fig. 6 wiederum wie bei der Ausführungsform der Fig. 4 eine Verriegelung der Park-Stellung (P) in zusätzlicher Abhängigkeit von der Stellung des Zündschlosses unter Vermittlung einer zündschloßabhängigen Verriegelungsvorrichtung 41 vorgesehen, die mit der Verriegelungsvorrichtung 41 der Fig. 4 bis auf die Stelle der Ankopplung und deren Ausbildung des Stellgestänges 51 an den Wählhebel 7 identisch ist.

Das Stellgestänge 51 der zündschloßabhängigen Verriegelungsvorrichtung 41 ist mit seinem zum Riegelschieber 45 entgegengesetzten Gestängeende 88 an einem zweiten Riegelelement 61 angelenkt, das seinerseits mittels eines Gelenkes 89 in Nähe des Nockenscheibenteiles 34 schwenkbar an einem fahrzeugfesten Trägerteil aufgehängt ist und einen klinkenartigen Gegensperrnocken 90 aufweist, welcher mit einem der Park-Stellung (P) zugeordneten zweiten Sperrnocken 60 am Nockenwellenteil 34 sowie mit einem Steuernocken 91, der den nicht in Abhängigkeit vom Zündschloß verriegelbaren Stellungen (R), (N), (D), (3) und (2) zugeordnet ist, zusammenarbeitet.

Das Riegelelement 61 ist durch federnde Mittel 92, welche sich zwischen einem fahrzeugfesten Widerlager 93 und einem zum Gestängeende 88 festen Federteller 94 abstützen, aus einer Verriegelungsstellung 95 - in welcher Sperr- und Gegensperrnocken 60 und 90 in Eingriff stehen - in die gezeichnete Freigangstellung 96 betätigbar, in welcher der Steuernocken 91 und der hierbei als Gegensteuernocken arbeitende klinkenartige Teil 90 des Riegelelementes 61 in Eingriff stehen. In der Neutralstellung (N) ist der Riegelschieber 45 durch Steuer- und Gegensteuernocken 91 und 90 in seiner Verriegelungsstellung 50 gehalten, wodurch die Schlüsselabzugsstellung 42 blockiert ist und sich der Schließzylinderkern in der Sperrstellung 85 befindet, wenn der Motor abgestellt - d.h. die Zündung abgeschaltet ist. Durch Niedertreten des Bremspedales wird über das Stellgestänge 9 die Verriegelung 12, 22 gelöst, so daß der Wählhebel 7 in die Park-Stellung (P) gebracht werden kann, wodurch die Gegenwirkung auf die federnden Mittel 52 entfällt und letztere den Riegelschieber 45 in die Freigangstellung 53 sowie das Riegelelement 61 - weil die federnden Mittel 92 schwächer sind - in die Verriegelungsstellung 95 betätigen.

Bei der bremspedalabhängigen Verriegelungsvorrichtung können die federnden Mittel 17 unmittelbar auf das schwenkbare Riegelelement 10 arbeiten, so daß das Gestänge 9 auch ein Seilzug sein kann.

**Patentansprüche**

1. Vorrichtung zum Verriegeln eines Betätigungshebels (7) einer Schaltvorrichtung eines Gangwechselgetriebes eines über ein Bremspedal (8) abbremsbaren Kraftfahrzeuges in einer einem bestimmten Schaltzustand oder Schaltprogramm zugehörigen Hebelstellung in Abhängigkeit von der Stellung des Bremspedales, bei welcher der schwenkbar gelagerte Betätigungshebel und ein durch ein mechanisches Stellgestänge (9) mit dem Bremspedal in Wirkung stehendes Riegelelement (10) sowohl jeweils in Nähe zueinander angeordnet und mit der verriegelbaren Hebelstellung zugeordneten formschlüssigen Sperr- und korrespondierenden Gegensperrgliedern (11,12) versehen sind, und bei der das Riegelelement durch eine das Bremspedal in der unbetätigten Ruhestellung haltende Rückholfeder in eine Sperr- und Gegensperrglieder in Eingriff haltende Verriegelungsstellung und beim Niedertreten des Bremspedales unter Überwindung der Federkraft der Rückholfeder (13) in eine Sperr- und Gegensperrglieder außer Eingriff bringende Freigangstellung bewegbar ist und das Stellgestänge ein federndes Zwischenglied (16,27) zur Veränderung der wirksamen Gestängelänge enthält und das Zwischenglied mit niedrigeren Federkräften als die Rückholfeder (13) ausgelegt ist und der Betätigungshebel wenigstens eine einem bestimmten Schaltzustand oder Schaltprogramm zugehörige nicht verriegelbare Hebelstellung ((2),(3),(R),(D)) aufweist und bei dem jeweils einer nicht verriegelbaren Hebelstellung ((2),(3),(D),(R)) zugehörige Eingriffsflächen (18,19,20) und korrespondierende Gegeneingriffsflächen (21) dem Betätigungshebel wie auch dem Riegelelement derart zugeordnet sind, daß das Riegelelement (10) in der unbetätigten Ruhestellung des Bremspedales (8) durch Betätigen des Betätigungshebels zwischen nicht verriegelbaren Hebelstellungen in seiner Freigangstellung (15) unter Überwindung der Federkraft des Zwischengliedes (16) gehalten wird und das Bremspedal durch die veränderte Gestängelänge an sich in seiner Ruhestellung verharrt,
**dadurch gekennzeichnet,**
daß das Stellgestänge (9) biegsam ausgebildet und das Riegelelement (10) schwenkbar gelagert und durch federnde Mittel (17) in seine Freigangstellung (15) betätigbar ist, deren Federkräfte niedriger als die Federkräfte des Zwischengliedes (16) ausgelegt sind, und daß das federnde Zwischenglied (16) zwei um eine gemeinsame Schwenkachse (24-24) gelagerte Hebel (25 und 26) aufweist, welche durch eine Feder (27 bzw. 28) in einer durch Anschlag- und Gegenanschlagmittel (29 und 30) fixierten Drehwinkelendstellung relativ zueinander gehalten sind, und daß der eine Hebel (25) mit dem Bremspedal (8) in Eingriff bringbar ist und das dem Brempedal (8) zugehörige Gestängeende (31) des Stellgestänges (9) mit dem anderen Hebel (26) zusammenarbeitet.

2. Vorrichtung nach Anspruch 1,
**dadurch gekennzeichnet,**
daß der Betätigungshebel (Wählhebel 7) mit einem zentrisch zu seiner Schwenkachse (33) angeordneten Nockenscheibenteil (34) verbunden ist, welches die dem Betätigungshebel zugehörigen Sperr- und Steuernocken (11 bzw. 22 bzw. 23 und 18 bzw. 19 bzw. 20) aufweist.

3. Vorrichtung nach Ansprüch 1 oder 2,

**dadurch gekennzeichnet,**

daß der dem Bremspedal (8) zugehörige Hebel (25) des Zwischengliedes (16) mit einem um die gemeinsame Schwenkachse (24-24) schwenkbar gelagerten Nockenhebel (35) sowohl durch eine lösbare Reibschlußverbindung (36) als auch durch eine Einstellfeder (37) verbunden und die Einstellfeder (37) in bezug auf die Wirkungslinie ihrer Federkräfte und ihre hebelseitigen Angriffspunkte (38 und 39) derart zur Schwenkachse (24-24) angeordnet ist, daß bei gelöster Reibschlußverbindung (36) durch Festlegung des Hebels (25) des Zwischengliedes (16) gegenüber einem fahrzeugfesten Teil ein den Nockenhebel (35) am Bremspedal (8) zur Anlage bringendes Hebelmoment auftritt.

4. Vorrichtung nach einem der Ansprüche 1 bis 3,

**dadurch gekennzeichnet,**

daß das Riegelelement (10) durch ein in Abhängigkeit von der Fahrgeschwindigkeit arbeitendes Stellglied (Elektromagnet 40) in seine Freigangstellung (15) - unabhängig von der Stellung des Bremspedales (8) - betätigbar ist.

5. Vorrichtung nach Anspruch 4,

**dadurch gekennzeichnet,**

daß das Stellglied (40) in Nähe des Bremspedales (8) angeordnet ist und auf einen das federnde Zwischenglied (16) mit dem Riegelelement (10) verbindenden Gestängeteil (31) arbeitet.

6. Vorrichtung nach einem der Ansprüche 1 bis 5,

**dadurch gekennzeichnet,**

daß der Betätigungshebel (Wählhebel 7) eine in zusätzlicher Abhängigkeit von der Stellung eines Zündschlosses verriegelbare Hebelstellung ((P)) aufweist und mit einer zündschloßabhängigen Verriegelungsvorrichtung (41) verbunden ist, bei der ein Zündschloß mit einer einzigen festgelegten Drehwinkelstellung (Schlüsselabzugsstellung 42) seines Schließzylinderkernes für den Schlüsselabzug vorgesehen ist, ein vom Zündschlussel her betätigbares Nockenwellenteil (43) mit einem Sperrnocken (44) und ein senkrecht zur Drehachse des Nockenwellenteiles (43) verschiebbarer Riegelschieber (45) mit einem korrespondierenden Gegensperrnocken (46) vorgesehen sind, Steuernocken (47) und korrespondierende Gegensteuernocken (48) an Nockenwellenteil (43) und Riegelschieber (45) derart vorgesehen sind, daß der Riegelschieber (45) beim Betätigen des Zündschlosses in Richtung einer Fahrtstellung (49) in eine Verriegelungsstellung (50) gelangt, in welcher der Gegensperrnocken (46) in der Bewegungsbahn des Sperrnockens (44) liegt und dadurch das Erreichen der Schlüsselabzugsstellung (42) durch den Schließzylinderkern blockiert, ein mit dem Riegelschieber (45) zusammenarbeitendes biegsames mechanisches Stellgestänge (51) zur Übertragung von Zug- und Druckkräften vorgesehen ist, der Riegelschieber (45) durch federnde Mittel (52) in eine Freigangstellung (53) betätigbar ist, in welcher sein Ge-. gensperrnocken (46) außerhalb der Bewegungsbahn des Sperrnockens (44) liegt und somit das Erreichen der Schlüsselabzugsstellung (42) für den Schließzylinderkern freigegeben ist, und daß die federnden Mittel (52) für die Freigangstellung (53) des Riegelschiebers (45) mit höheren Federkräften als die federnden Mittel (17) für die Freigangstellung (15) des schwenkbaren Riegelelementes (10) ausgelegt sind und das Stellgestänge (51) des Riegelschiebers (45) durch eine einen Leerweg (Differenzdrehwinkel 54) ermöglichende Gestängeverbindung (55) derart mit dem schwenkbaren Riegelelement (10) verbunden ist, daß das schwenkbare Riegelelement (10) durch die federnden Mittel (52) für die Freigangstellung (53) des Riegelschiebers (45) in seine Verriegelungsstellung (14) betätigbar ist, daß der Leerweg (Differenzdrehwinkel 54) der Gestängeverbindung (55) wirksam ist, wenn das Bremspedal (8) sich in seiner Ruhestellung und gleichzeitig sowohl das schwenkbare Riegelelement (10) als auch der Riegelschieber (45) sich in der jeweiligen Verriegelungsstellung (14 bzw. 50) befinden, daß beim Betätigen des schwenkbaren Riegelelementes (10) in die Freigangstellung (15) der Riegelschieber (45) in seine Verriegelungsstellung (50) gebracht wird, daß der Schließzylinderkern (Nockenwellenteil 43) unabhängig von der Stellung des Bremspedales (8) ausschließlich in der verriegelbaren Hebelstellung ((P)) des Betätigungshebels (Wählhebel 7) in seine Schlüsselabzugsstellung (42) betätigbar und daß der Betätigungshebel (Wählhebel 7) unabhängig von der Stellung des Bremspedales (8) in seiner verriegelbaren Hebelstellung ((P)) verriegelt ist, wenn sich der Schließzylinderkern (Nockenwellenteil 43) in seiner Schlüsselabzugsstellung (42) befindet.

7. Vorrichtung nach Anspruch 6,

**dadurch gekennzeichnet,**

daß die Verbindung (55) zwischen dem Stellgestänge (51) des Riegelschiebers (45) und dem schwenkbaren Riegelelement (10) ein Schiebegelenk (56, 57) enthält.

8. Vorrichtung nach Anspruch 6 oder 7,

**dadurch gekennzeichnet,**

daß der dem schwenkbaren Riegelelement (10) zugehörige Hebel (26) des federnden Zwischengliedes (16) als zweiarmiger Umkehrhebel ausgebildet ist und das zum schwenkbaren Riegelelement (10) führende Stellgestänge (9) mit dem einen Hebelarm (58) und das zum Riegelschieber (45) führende Stellgestänge (51) mit dem anderen Hebelarm (59) des als Umkehrhebel arbeitenden Hebels (26) verbunden sind.

9. Vorrichtung nach einem der Ansprüche 1 bis 5,

**dadurch gekennzeichnet,**

daß dem Betätigungshebel (Wählhebel 7) für eine zwischen zwei verriegelbaren Hebelstellungen ((P) und (N)) liegende nicht verriegelbare Hebelstellung ((R)) ein zwischen zwei Sperrnocken (11 und 22) liegender Steuernocken (20) zugeordnet ist.

10. Vorrichtung nach einem der Ansprüche 1 bis 5 und 9,

**dadurch gekennzeichnet,**

daß der Betätigungshebel (Wählhebel 7) eine in zusätzlicher Abhängigkeit von der Stellung eines Zündschlosses verriegelbare Hebelstellung ((P)) aufweist, welcher ein zusätzlicher zweiter Sperrnocken (60) am Betätigungshebel (Wählhebel 7) zugeordnet ist, der mit einem mit einer zündschlossabhängigen Verriegelungsvorrichtung (41) verbundenen schwenkbaren Riegelelement (61) derart zusammenarbeitet, daß der Betätigungshebel (Wählhebel 7) in dieser verriegelbaren Hebelstellung ((P)) durch die Betätigung des Zündschlosses in eine Schlüsselabzugsstellung (42) verriegelt wird sowie die Betätigung des Zündschlosses in die Schlüsselabzugsstellung (42) gesperrt ist, wenn sich der Betätigungshebel (Wählhebel 7) nicht in der in Abhängigkeit von der Stellung des Zündschlosses verriegelbaren Hebelstellung ((P)) befindet.

11. Vorrichtung nach Anspruch 10,

**dadurch gekennzeichnet,**

daß das Nockenscheibenteil (34) mit beiden derselben in Abhängigkeit von der Stellung des Zündschlosses verriegelbaren Hebelstellung ((P)) zugeordneten Sperrnocken (11 und 60) versehen ist.

12. Vorrichtung nach Anspruch 10 oder 11,

**gekennzeichnet durch**

eine Verriegelungsvorrichtung (41) zwischen Zündschloß (Nockenwellenteil 43) und Handwählhebel (7), bei der ein Sperrnokken eines über den korrespondierenden Zündschlussel entgegen federnden Mitteln betätigbaren und zur Drehachse des Zündschlosses sowohl fluchtend als auch drehbar gelagerten Nockenwellenteiles mit einem an einem zum Zündschloßgehäuse bewegungsfesten Gehäuseteil verschiebbar angeordneten Riegelelement zusammenarbeitet, welches mit einem Gestängeende eines mechanischen Stellgestänges kinematisch verbunden ist dessen anderes Gestängeende mit einem weiteren Riegelelement kinematisch verbunden ist, welches sowohl in Nähe des Handwählhebels an einem fahrzeugfesten Gehäuseteil schwenkbar gelagert ist als auch mit einem die Wählbewegungen mitausführenden Sperrnocken des Handwählhebels über korrespondierende Gegensperrmittel zusammenarbeitet, und bei der der Handwählhebel in eine Parkstellung betätigbar ist und das Zündschloß ausschließlich eine festgelegte Drehwinkelstellung (Ruhestellung) aufweist, in welcher der Zündschlüssel mit dem Zündschloß in bzw. außer Eingriff bringbar ist, und bei der die gegenseitige Zuordnung von Sperrnocken und Riegelelementen so getroffen ist, daß sowohl das Zündschloß ausschließlich in der Parkstellung des Handwählhebels in die Ruhestellung bringbar als auch der Handwählhebel in der Ruhestellung des Zündschlosses zwangsläufig in seiner Parkstellung verriegelt ist, und bei der der Sperrnocken des Handwählhebels gegenüber den Gegensperrmitteln des zugehörigen schwenkbaren Riegelelementes entkoppelt ist, wenn der Handwählhebel nicht in der Parkstellung steht, und bei der nach Gehäuse sich abstützende federnde Mittel im Sinne einer Entkoppelung auf das schwenkbare Riegelelement einwirken und die Anordnung so getroffen ist, daß das Nockenwellenteil mit seiner Drehachse die Öffnung eines rahmenförmigen Schiebers des verschiebbaren Riegelelementes durchsetzt und einen zusätzlichen Steuernocken aufweist sowie über seinen Sperrnocken mit einem Gegensperrnocken und mit seinem Steuernocken mit einem Gegensteuernocken in Eingriff bringbar ist sowie Gegensperrnocken und Gegensteuernocken an in bezug auf das Nockenwellenteil diametral sich gegenüberliegenden Stellen des Schiebers sich jeweils radial zur Drehachse des Nockenwellenteiles erstreckend, so angeordnet sind, daß der Gegensperrnocken sowohl um einen Differenzdrehwinkel vor der der Ruhestellung entsprechenden Drehwinkelstellung des Sperrnockens des Nockenwellenteiles liegt als auch durch die der Betätigung durch den Zündschlüssel entgegenwirkenden federnden Mittel gegenüber dem Sperrnocken des Nockenwellenteiles außer Eingriff bringbar ist, und daß die der Betätigung des Nokkenwellenteiles durch den Zündschlüssel engegenwirkenden federnden Mittel mit höheren Federkräften ausgelegt sind als die auf das schwenkbare Riegelelement im Sinne einer Entkoppelung von dem Sperrnocken des Handwählhebels einwirkenden federnden Mittel, und daß der Steuernocken des Nockenwellenteiles beim Betätigen in die der Fahrtstellung des Zündschlosses entsprechende Drehwinkelstellung mit dem Gegensteuernocken (48) so in Eingriff gelangt, daß sowohl der Gegensperrnocken (46) des Schiebers in der Bewegungsbahn des Sperrnockens (44) des Nockenwellenteiles (43) liegt als auch das schwenkbare Riegelelement (61) von dem Sperrnokken (60) des Handwählhebels (7) entkoppelt ist.

**Claims**

1. Device for locking an actuating lever (7) of a shifting device of a gear-change mechanism of a motor vehicle, brakeable via a brake pedal (8), in a lever position associated with a particular shift state or shifting program, as a function of the position of the brake pedal, in which the swivellable mounted actuating lever and a locking element (10) in operative connection with the brake pedal via a mechanical adjusting linkage (9) are both in each case arranged in proximity to one another and provided with positively engaging blocking and corresponding counter-blocking members (11, 12) associated with the lockable lever position, and in which the locking element can be moved by a restoring spring (13), which holds the brake pedal in the unactuated rest position, into a locking position holding the blocking and counter-blocking members in engagement and, when the brake pedal is depressed, the spring force of the restoring spring being overcome, can be moved into a floating position bringing the blocking and counter-blocking members out of engagement, and the adjusting linkage contains a resiliently-acting intermediate member (16, 27) for changing the effective linkage length and the intermediate member is designed with lower spring forces than the restoring spring (13), and the actuating lever has at least one nonlockable lever position ((2), (3), (R), (D)) associated with a particular shift state or shifting program, and in which engagement faces (18, 19, 20), in each case associated with one nonlockable lever position ((2), (3), (D), (R)), and corresponding counter-engagement faces (21) are associated with the actuating lever and also with the locking element in such a way that, in the unactuated rest position of the brake pedal (8), the locking element (10) is held by actuation of the actuating lever between nonlockable lever positions in its floating position (15), the spring force of the intermediate member (16) being overcome, and, by virtue of the changed linkage length, the brake pedal remains essentially in its rest position,
characterised in
that the adjusting linkage (9) is of flexible design and the locking element (10) is swivellably mounted and can be actuated into its floating position (15) by resilient means (17), the spring forces of which are designed to be lower than the spring forces of the intermediate member (16), and in that the resiliently-acting intermediate member (16) has two levers (25 and 26) which are mounted about a common swivelling axis (24-24) and are held relative to one another by a spring (27 or 28) in an end position of the angle of rotation fixed by stop and counter-stop means (29 and 30), and in that one (25) of the levers can be brought into engagement with the brake pedal (8) and that linkage end (31) of the adjusting linkage (9) which is associated with the brake pedal (8) cooperates with the other lever (26).

2. Device according to Claim 1,
characterised in
that the actuating lever (selector lever 7) is connected to a cam disc part (34) which is arranged concentrically to its swivelling axis (33) and has the blocking and control cams (11, 22 or 23 and 18, 19 or 20) associated with the actuating lever.

3. Device according to Claim 1 or 2,
characterised in
that that lever (25) of the intermediate member (16) which is associated with the brake pedal (8) is connected both by a releasable frictional connection (36) and by an adjusting spring (37) to a cam lever (35) mounted so as to be swivellable about the common swivellable axis (2424) and, with regard to the line of action of its spring forces and its points of application (38 and 39) on the levers, the adjusting spring (37) is arranged in such a way relative to the swivelling axis (24-24) that, with the frictional connection (36) released, a lever moment which brings the cam lever (35) up against the brake pedal (8) arises by fixing the lever (25) of the intermediate member (16) relative to a part fixed to the vehicle.

4. Device according to one of Claims 1 to 3,
characterised in
that the locking element (10) can be actuated into its floating position (15) - irrespective of the position of the brake pedal 98) - by an actuator (electromagnet 40) operating as a function of the driving speed.

5. Device according to Claim 4,
characterised in
that the actuator (40) is arranged in proximity to the brake pedal (8) and acts on a linkage part (31) connecting the resiliently-acting intermediate member (16) to the locking element (10).

6. Device according to one of Claims 1 to 5,
characterised in
that the actuating lever (selector lever 7) has a lever position ((P)) lockable additionally as a function of the position of an ignition lock and is connected to a locking device (41) dependent on the ignition lock, in which an ignition lock is provided with a single fixed angular position (key withdrawal position 42) of its lock cylinder core for key withdrawal, a camshaft part (43) actuable by the ignition key and having a blocking cam (44) and a locking slide (45) displaceable perpendicularly to the axis of rotation of the camshaft part (43) and having a corresponding counter-blocking cam (46), control cams (47) and corresponding counter-control cams (48) are provided on the camshaft part (43) and locking slide (45) in such a way that, when the ignition lock is actuated in the direction of a driving position (49), the locking slide (45) moves into a locking position (50) in which the counter-blocking cam (46) lies in the path of motion of the blocking cam (44) and thereby blocks the reaching of the key withdrawal position (42) by the lock cylinder core, a flexible mechanical adjusting linkage (51) cooperating with the locking slide (45) is provided for the transmission of tensile and compressive forces, the locking slide (45) can be actuated by resilient means (52) into a floating position (53) in which its counter-blocking cam (46) lies outside the path of motion of the blocking cam (44) and the lock cylinder core is thus free to reach the key withdrawal position (42), and in that the resilient means (52) for the floating position (53) of the locking slide (45) are designed with higher spring forces than the resilient means (17) for the floating position (15) of the swivellable locking element (10) and the adjusting linkage (51) of the locking slide (45) is connected to the swivellable locking element (10) in such a way by a linkage connection (55) permitting an idle path (differential angle of rotation 54) that the swivellable locking element (10) can be actuated into its locking position (14) by the resilient means (52) for the floating position (53) of the locking slide (45), that the idle path (differential angle of rotation 54) of the linkage connection (55) is operative when the brake pedal (8) is in its rest position and, simultaneously, both the swivellable locking element (10) and the locking slide (45) are each in their respective locking position (14 and 50 respectively), that, when the swivellable locking element (10) is actuated into the floating position (15), the locking slide (45) is brought into its locking position (50), that it is possible to actuate the lock cylinder core (camshaft part 43) into its key withdrawal position (42) irrespective of the position of the brake pedal (8) only in the lockable lever position ((P)) of the actuating lever (selector lever 7), and that, irrespective of the position of the brake pedal (8), the actuating lever (selector lever 7) is locked in its lockable lever position ((P)) when the lock cylinder core (camshaft part 43) is in its key withdrawal position (42).

7. Device according to Claim 6,
characterised in
that the connection (55) between the adjusting linkage (51) of the locking slide (45) and the swivellable locking element (10) contains a sliding joint (56, 57).

8. Device according to Claim 6 or 7,
characterised in
that that lever (26) of the resiliently-acting intermediate member (16) which is associated with the swivellable locking element (10) is designed as a two-armed reversing lever and the adjusting linkage (9) leading to the swivellable locking element (10) is connected to one lever arm (58) and the adjusting linkage (51) leading to the locking slide (45) is connected to the other lever arm (59) of the lever (26) acting as a reversing lever.

9. Device according to one of Claims 1 to 5,
characterised in
that a control cam (20) lying between two blocking cams (11 and 22) is associated with the actuating lever (selector lever 7) for a nonlockable lever position ((R)) lying between two lockable lever positions ((P) and (N)).

10. Device according to one of Claims 1 to 5 and 9,
characterised in
that the actuating lever (selector lever 7) has a lever position ((P)) which can be locked additionally as a function of the position of an ignition lock and with which is associated an additional second blocking cam (60) at the actuating lever (selector lever 7), which cooperates with a swivellable locking element (61) connected to an ignition-lock-dependent locking device (41) in such a way that the actuating lever (selector lever 7) is locked in this lockable lever position ((P)) by the actuation of the ignition lock into a key withdrawal position (42) and the actuation of the ignition lock into the key withdrawal position (42) is blocked when the actuating lever (selector lever 7) is not in the lever position ((P)) lockable as a function of the position of the ignition lock.

11. Device according to Claim 10,
characterised in
that the cam disc part (34) is provided with both blocking cams (11 and 60) associated with the same lever position ((P)) which can be locked as a function of the position of the ignition lock.

12. Device according to Claim 10 or 11,
characterised
by a locking device (41) between ignition lock (camshaft part 43) and manual selector lever (7), in which a blocking cam of a camshaft part actuable counter to resilient means via the corresponding ignition key and mounted both in alignment with and rotatably relative to the axis of rotation of the ignition lock cooperates with a locking element which is arranged displaceably on a housing part fixed in terms of movement relative to the ignition-lock housing and which is connected kinematically to one linkage end of a mechanical adjusting linkage, the other linkage end of which is connected kinematically to a further locking element both mounted swivellably on a housing part fixed to the vehicle, in the vicinity of the manual selector lever, and cooperating with a blocking cam, jointly executing the selection movements, of the manual selector lever via corresponding counter-blocking means and in which the manual selector lever is actuable into a parking position and the ignition lock has only one set rotary angle position (position of rest), where the ignition key can be brought into and out of engagement with the ignition lock, and in which the mutual relationship of the blocking cam and locking elements is such that the ignition lock can only be brought into the position of rest in the parking position of the manual selector lever and the manual selector lever is positively locked in its parking position in the position of rest of the ignition lock, and in which the blocking cam of the manual selector lever is decoupled from the counter-blocking means of the associated swivellable locking element when the manual selector lever is not in the parking position, and in which resilient means supported relative to the housing act with an decoupling effect on the swivellable locking element and the arrangement is such that the camshaft part passes with its axis of rotation through the opening of a frame-shaped slide of the displaceable locking element, has an additional control cam and can be brought into engagement via its blocking cam with a counter-blocking cam and via its control cam with a counter-control cam, and the counter-blocking cam and counter-control cam are arranged, each extending radially relative to the axis of rotation of the camshaft part, at points of the slide located diametrically opposite one another in relation to the camshaft part, in such a way that the counter-blocking cam is both located at a differential angle of rotation in front of the rotary angle position, corresponding to the position of rest, of the blocking cam of the camshaft part and can be brought out of engagement with the blocking cam of the camshaft part by the resilient means counteracting the actuation by the ignition key, and that the resilient means counteracting the actuation of the camshaft part by the ignition key are designed with higher spring forces than resilient means acting on the swivellable locking element with the effect of a decoupling from the blocking cam of the manual selector
lever, and that, during actuation into the rotary angle position corresponding to the driving position of the ignition lock, the control cam of the camshaft part comes into engagement with the counter-control cam (48) in such a way that both the counter-blocking cam (46) of the slide is located in the path of movement of the blocking cam (44) of the camshaft part (43) and the swivellable locking element (61) is decoupled from the blocking cam (60) of the manual selector lever (7).

**Revendications**

1. Dispositif de verrouillage d'un levier d'actionnement (7) d'un dispositif de changement de vitesses d'une transmission d'un véhicule, pouvant être freiné par l'intermédiaire d'une pédale de frein, dans une position du levier qui est associée à un rapport ou une programmation de rapports déterminés en fonction de la position de la pédale de frein, dispositif dans lequel le levier d'actionnement monté de façon pivotante et un élément de verrouillage (10), coopérant avec la pédale de frein par l'intermédiaire d'une tringlerie mécanique de manoeuvre (9), sont pourvus d'organes d'arrêt et de contre-organes d'arrêt (11, 12) respectivement disposés à proximité l'un de l'autre et opérant par conjugaison de formes en correspondance avec la position verrouillable du levier, et dans lequel l'élément de verrouillage peut d'une part être amené par un ressort de rappel (13), arrêtant la pédale de frein dans la position de repos non actionnée, jusque dans une position de verrouillage, maintenant en prise des organes d'arrêt et des contre-organes d'arrêt, et peut d'autre part être amené, lors d'un abaissement de la pédale de frein et par contrebalancement de la force du ressort de rappel, jusque dans une position de libération assurant la séparation des organes d'arrêt et des organes de contre-arrêt, tandis que la tringlerie de manoeuvre comporte un organe intermédiaire élastique (16, 27) servant à modifier la longueur utile de la tringlerie et l'organe intermédiaire est conçu pour exercer des forces élastiques plus petites que celles du ressort de rappel (13), et le levier d'actionnement comporte au moins une position non verrouillable ((2), (3), (R), (D)) associée à un rapport ou une programmation de rapports déterminés, et dans lequel des surfaces d'activation (18, 19, 20), associées respectivement à une position non verrouillable de levier ((2), (3), (D), (R)) ainsi que des contre-surfaces d'activation (21) correspondantes sont associées au levier d'actionnement et également à l'élément de verrouillage de telle sorte que l'élément de verrouillage (10) soit maintenu, dans la position de repos non actionnée de la pédale de frein (8), par manoeuvre du levier d'actionnement entre des positions non verrouillables de celui-ci, dans sa position de libération (15), avec contrebalancement de la force élastique de l'organe intermédiaire (16), et que la pédale de frein soit immobilisée dans sa position de repos par modification de la longueur de tringlerie,
caractérisé en ce
que la tringlerie de manoeuvre (9) est réalisée souple et l'élément de verrouillage (10) est monté de façon pivotante et peut être amené dans sa position de libération (15) à l'aide de moyens élastiques (17), congrus de telle sorte que leurs forces élastiques soient plus petites que les forces élastiques de l'organe intermédiaire (16), et en ce que l'organe intermédiaire élastique (16) comporte deux leviers (25 et 26) pouvant pivoter autour d'un axe de pivotement commun (24-24) et maintenus l'un par rapport à l'autre au moyen d'un ressort (27 ou 28) dans une position angulaire limite fixée par des moyens de butée et des contre-moyens de butée (29 et 30), et en ce qu'un des leviers (25) peut-être mis en prise avec la pédale de frein (8) et l'extrémité (31), associée à la pédale de frein (8), de la tringlerie de manoeuvre (9) coopère avec l'autre levier (26).

2. Dispositif selon la revendication 1,
caracterisé en ce

que le levier d'actionnement (levier sélecteur 7 ) est relié à une partie (34) formant disque à cames qui est centrée sur son axe de pivotement (33) et qui comporte des cames d'arrêt et de commande (11 ou 22 ou 23 et 18 ou 19 ou 20 ) associées au levier d'actionnement.

3. Dispositif selon la revendication 1 ou 2,
caractérisé en ce

que le levier (25), associé à la pédale de frein (8), de l'organe intermédiaire (16) est relié, au moyen d'un levier à came (35), monté de façon à pouvoir pivoter autour de l'axe de pivotement commun (24-24), d'une part par une liaison séparable (36) opérant par friction et d'autre part par un ressort de réglable (37), et en ce que ce ressort de réglable (37) est disposé par rapport à l'axe de pivotement (24-24), en relation avec l'orientation de sa force élastique et de ses points d'action (38 et 39) situés du côté du levier, de telle sorte que, lorsque la liaison de friction (26) est séparée, il se produise, par fixation du levier (25) de l'organe intermédiaire (16) par rapport à une partie solidaire du véhicule, un moment assurant l'application du levier à came (35) contre la pédale de frein (8).

4. Dispositif selon une des revendications 1 à 3,
caractérisé en ce

que l'élément de verrouillage (10) peut être amené - indépendamment de la position de la pédale de frein (8) - dans sa position de libération (15) par un organe de manoeuvre (électro-aimant 40 ) opérant en fonction de la vitesse de marche.

5. Dispositif selon la revendication 4,
caractérisé en ce

que l'organe de manoeuvre (40) est disposé à proximité de la pédale de frein (8) et agit sur une partie de tringlerie (31), reliant l'organe intermédiaire élastique (16) à l'élément de verrouillage (10).

6. Dispositif selon une des revendications 1 à 5,
caractérisé en ce

que le levier d'actionnement (levier sélecteur 7 ) comporte une position verrouillable ((P)) fonction additionnellement de la position d'une serrure de contact et est relié à un dispositif de verrouillage (41) dépendant de la serrure de contact, dispositif dans lequel une serrure de contact est pourvue d'une seule position angulaire fixée (position de sortie de clé 42 ) pour son noyau cylindrique de fermeture en vue de la sortie de la clé, une partie (43) d'arbre à cames pouvant être actionnée par la clé de contact est pourvue d'une came d'arrêt (44) et un poussoir de verrouillage (45), mobile en translation perpendiculairement à l'axe de rotation de la partie d'arbre à cames (43), est pourvu d'une contre-came d'arrêt (46) correspondante, il est prévu sur la partie d'arbre à cames (43) et sur le poussoir de verrouillage (45) une came de commande (47) et une contre-came de commande (48) de telle sorte que le poussoir de verrouillage (45) parvienne, lors de l'actionnement de la serrure de contact en direction d'une position de marche (49), dans une position de verrouillage (50) dans laquelle la contre-came d'arrêt (46) est située dans la voie de déplacement de la came d'arrêt (44) et empêche ainsi l'atteinte de la position de sortie de clé (42) par le noyau cylindrique de fermeture, il est prévu une tringlerie de manoeuvre (51) mécanique et souple qui coopère avec le poussoir de verrouillage (45) pour une transmission de forces de traction et de compression, le poussoir de verrouillage (45) peut être amené par des moyens élastiques (52) dans une position de libération (53) dans laquelle sa contre-came d'arrêt (46) est située à l'extérieur de la voie de déplacement de la came d'arrêt (44) et permet ainsi l'atteinte de la position de sortie de clé (42) pour le noyau cylindrique de fermeture, et en ce que les moyens élastiques (52) intervenant pour la position de libération (53) du poussoir de verrouillage (45) sont conçus de façon à exercer des forces élastiques plus grandes que les moyens élastiques (17) intervenant pour la position de libération (15) de l'élément pivotant de verrouillage (10) et la tringlerie de manoeuvre (51) du poussoir de verrouillage (45) est reliée, au moyen d'une liaison (55) permettant une course à vide ( angle différentiel de rotation 54) avec l'élément pivotant de verrouillage (10) de telle sorte que l'élément pivotant de verrouillage (10) puisse être amené dans sa position de verrouillage (14) par les moyens élastiques (52) intervenant pour la position de libération (53) du poussoir de verrouillage (55), en ce que la course à vide ( angle différentiel de rotation 54) de la liaison de tringlerie (55) agit lorsque la pédale de frein (8) se trouve dans sa position de repos et lorsque simultanément aussi bien l'élément pivotant
de verrouillage (10) que le poussoir de verrouillage (45) se trouvent dans la position de verrouillage correspondante (14 ou 50), en ce que, lors de l'actionnement de l'élément pivotant de verrouillage (10) jusque dans sa position de libération (15), le poussoir de verrouillage (45) est amené dans sa position de verrouillage (50), en ce que le noyau cylindrique de fermeture (partie d'arbre à cames 43) peut être amené dans sa position de sortie de clé (42), indépendamment de la position de la pédale de frein (8) et exclusivement dans la position verrouillable ((P)) du levier d'actionnement (levier sélecteur 7), et en ce que le levier d'actionnement (levier sélecteur 7) est verrouillé dans sa position verrouillable ((P)), indépendamment de la position de la pédale de frein (8), lorsque le noyau cylindrique de fermeture (partie d'arbre à cames 43 ) se trouve dans sa position de sortie de clé (42).

7. Dispositif selon la revendication 6,
caractérisé en ce
que la liaison (55) entre la tringlerie de manoeuvre (51) du poussoir de verrouillage (45) et l'élément pivotant de verrouillage (10) comporte une articulation coulissante (56, 57).

8. Dispositif selon la revendication 6 ou 7,
caractérisé en ce
que le levier (26), associé à l'élément pivotant de verrouillage (10), de l'organe intermédiaire élastique (16) est agencé comme un levier de renvoi à deux bras et la tringlerie de manoeuvre (9) aboutissant à l'élément de verrouillage (10) est reliée à un des bras (58) du levier (26) opérant comme un levier de renvoi tandis que la tringlerie de manoeuvre (51) aboutissant au poussoir de verrouillage (45) est reliée à l'autre bras (59) du levier précité.

9. Dispositif selon une des revendications 1 à 5,
caractérisé en ce
qu'une came de commande (20), située entre deux cames d'arrêt (ll et 22) est associée au levier d'actionnement (levier sélecteur 7) en correspondance avec une position non verrouillable ((R)) du levier qui est située entre deux positions verrouillables ((P) et (N)) dudit levier.

10. Dispositif selon une des revendications 1 à 5 et 9,
caractérisé en ce
que le levier d'actionnement ( levier sélecteur 7 ) comporte une position ((P)) verrouillable additionnellement en fonction de la position d'une serrure de contact et à laquelle est associée une seconde came additionnelle d'arrêt (60) prévue sur le levier d'actionnement (levier sélecteur 7), cette seconde came coopérant avec un élément pivotant de verrouillage (61) relié à un dispositif de verrouillage (41) dépendant de la serrure de contact de telle manière que le levier d'actionement (levier sélecteur 7) soit verrouillé dans cette position verrouillable ((P)) par l'actionnement de la serrure de contact dans une position de sortie de clé (42) et qu' également l'actionnement de la serrure de contact dans la position de sortie de clé (42) soit empêché lorsque le levier d'actionnement (levier sélecteur 7 ) ne se trouve pas dans la position ((P)) verrouillable en fonction de la position de la serrure de contact.

11. Dispositif selon la revendication 10,
caractérisé en ce
que la partie d'arbre à cames (34) est pourvue de deux cames d'arrêt (ll et 60) associées à la même position de levier ((P)) qui est verrouillable en fonction de la position de la serrure de contact.

12. Dispositif selon la revendication 10 ou 11,
caractérisé
par un dispositif de verrouillage (41) situé entre la serrure de contact (partie d'arbre à cames 43) et le levier de sélection manuelle (7), dispositif dans lequel une came d'arrêt d'une partie d'arbre à cames, pouvant être actionnée par l'intermédiaire de la clé de contact correspondante en opposition à des moyens élastiques et disposée de façon à être alignée avec l'axe de rotation de la serrure de contact et également à pouvoir tourner par rapport à celui-ci, coopère avec un élément de verrouillage monté avec possibilité de translation sur une partie fixe par rapport au boîtier de la serrure de contact et qui est relié cinématiquement avec une extrémité d'une tringlerie mécanique de manoeuvre, dont l'autre extrémité est reliée cinématiquement avec un autre élément de verrouillage qui est d'une part monté de façon pivotante, à proximité du levier de sélection manuelle, sur une partie solidaire du véhicule et qui coopère d'autre part, par l'intermédiaire de contre-moyens d'arrêt correspondants, avec une came d'arrêt du levier de sélection manuelle participant aux mouvements de sélection, et dispositif dans lequel le levier de sélection manuelle peut être amené dans une position de garage et la serrure de contact comporte exclusivement une position angulaire fixée ( position de repos ), dans laquelle la clé de contact peut être engagée dans la serrure de contact ou sortie de celle-ci, et dans lequel l'association mutuelle de cames d'arrêt et d'éléments de verrouillage est conçue de telle sorte que d'une part la serrure de contact puisse être amenée dans la position de repos exclusivement lorsque le levier de sélection manuelle se trouve dans la position de garage et que d'autre part le levier de sélection manuelle soit verrouillé obligatoirement dans sa position de garage lorsque la serrure de contact se trouve dans la position de repos, et la came d'arrêt du' levier de sélection manuelle est désaccouplée des contre-moyens d'arrêt de l'élément pivotant de verrouillage associé lorsque le levier de sélection manuelle ne se trouve pas dans la position de garage, tandis que des moyens élastiques s'appuyant contre un carter agissent dans le sens d'un désaccouplement sur l'élément pivotant de verrouillage et l'agencement est conçu de telle sorte que la partie d'arbre à cames comporte un axe de rotation qui traverse l'ouverture prévue dans un poussoir en forme de cadre de l'élément pivotant de verrouillage et comporte une came de commande additionnelle de telle sorte qu'elle puisse être amenée en prise avec une contre-came d'arrêt par l'intermédiaire de sa came d'arrêt et avec une contre-came de commande par l'intermédiaire de sa came de commande, tandis que des contre-cames d'arrêt et des contre-cames de commande sont prévues sur le poussoir dans des positions diamétralement opposées à celles de la partie d'arbre à cames en s'étendant respectivement radialement par rapport à l'axe de rotation de cette partie d'arbre à cames et en étant agencées de telle sorte que la contre-came d'arrêt soit située, avec décalage d'un angle différentiel, avant la position angulaire, correspondant à la position de repos, de la came d'arrêt de la partie d'arbre à cames et pouvant également être écartée de la came d'arrêt de la partie d'arbre à cames par les moyens élastiques s'opposant à l'action nement par la clé de contact, et que les moyens élastiques s'opposant à l'actionnement de la partie d'arbre à cames par la clé de contact soient conçus de façon à exercer des forces élastiques plus grandes que les moyens élastiques agissant sur l'élément pivotant de verrouillage dans le sens d'un désaccouplement par rapport à la came d'arrêt du levier de sélection manuelle, et que la came de commande de la partie d'arbre à cames, lors d'un actionnement de cette partie jusque dans la position angulaire correspondant à la position de marche de la serrure de contact, entre en prise avec la contre-came de commande (48) de telle sorte qu'aussi bien la contre-came d'arrêt (46) du poussoir soit située dans la voie de déplacement de la came d'arrêt (44) de la partie d'arbre à cames (43) que l'élément pivotant de verrouillage (61) soit désaccouplé de la came d'arrêt (60) du levier de sélection manuelle (7).

Fig.1

(P)  (R)  (N)  (D)  (3)  (2)

EP 0 373 368 B1

Fig. 2

Fig. 2a

Fig. 2b

# Fig. 3

# Fig. 4

Fig. 4a

Fig. 4b

Fig. 4c

Fig. 4d

Fig. 5

Fig. 6